# EUROPEAN PATENT APPLICATION

(11) **EP 1 223 148 A1**
(43) Date of publication of application: **17.07.2002**
(21) Application number: 01890006.8
(22) Date of filing: 10.01.2001
(51) Int. Cl.: C02F 3/14, B01F 3/04, C02F 3/16, C02F 3/26

(54) **Device for the injection and dissolution of oxygen in water effluents**

(71) Applicant: Bacicurinski, Bernardo Mauricio, 04041-003 Sao Paulo (BR)
(72) Inventor: Bacicurinski, Bernardo Mauricio, 04041-003 Sao Paulo (BR)
(74) Representative: Miksovsky, Alexander, Dipl.-Ing.

(57) **Abstract**

Conversion installation system of effluent treatment to be adapted to superficial aerators in effluent treatment to create a watertight area of injection and dissolution of pure oxygen which, diluted in liquid means, will promote the required treatment. It is proposed that basically a chamber (11) in the format of a cover device is enclosed, placed above the level of the liquid to be treated and defining internally a watertight chamber (12) of pure oxygen conditioning injected through a superior entrance (13) provided in the cover (11).

## Description

The present report refers to a conversion installation system of effluent treatment and, specifically, to a constructive system to be adapted to superficial effluent treatment aerators in a way to create a watertight area of pure oxygen injection and dissolution which, diluted in liquid means, will promote the required treatment.

The goal of the present invention is to allow the conversion of effluent treatment installations that were initially projected to deal with superficial aerators into an installation that allows the usage of systems of pure oxygen injection to obtain remarkable efficiency levels in the dissolution of this gas in liquid means.

It is known that the traditional superficial aeration process views obtaining, through splash action, a dissolution of the oxygen found in the air (in a concentration of 21 %) in the liquid means to be treated, to allow an oxidation of this means achieving an OBD (oxygen biological demand) and an OCD (oxygen chemical demand), in foam activated process (live bacteria forming established flakes that need O₂ to get energy to be fed).

The biological processes that use pure oxygen demand high implementation costs due to the necessity of installing new and specific equipments to such technology. In any process where oxygen must be used to remove OBD or OCD, a high area of liquid gas is necessary and this is the reason why there is a splash in conventional aerators, so that a better incorporation of oxygen, due to the microbubbles of liquid formed, is allowed.

Another important factor for the gas dissolution is that the splash promotes a vigorous mix to dilute the oxygen in liquid means.

Therefore, nowadays it is possible to view the process of effluent treatment through superficial aerators that present as a main basis of work the dissolution of oxygen found in the air and the biological process that uses pure oxygen. The first process presents inferior efficiency levels if compared to the second one, because this last one uses pure oxygen, which is ideal for the effluent treatment to have excellent results. Despite the efficiency of the second process, it is also known that if it is applied directly in aerators of pre-existing surfaces, it will bring the need for large investments in new installations, such as water treatment plants, because if this is not done the project will not work out.

Then, the goal of the present invention is to provide the conversion of effluent treatment installations to be applied in previously installed surface aerators, including pure oxygen injection to promote, with total efficiency, a chemical/biological effluent treatment process. This goal is basically achieved through the placement of a cover above the liquid level where the surface aerator is installed, so that this cover encloses the pure oxygen that is injected in its interior, creating a rich atmosphere in oxygen, which, by the splash action, will promote a slow gas absorption that will be immediately incorporated and mixed to the liquid means.

A conversion installation system according to the invention is essentially characterized in that basically a chamber in the format of a cover device is enclosed, placed above the level of the liquid to be treated and defining internally a watertight chamber of pure oxygen conditioning injected through a superior entrance provided in the cover.

Preferred embodiments of the invention are defined in the dependent subclaims.

For a better comprehension, the system will be described in detail, with references to the attached drawings, in which:

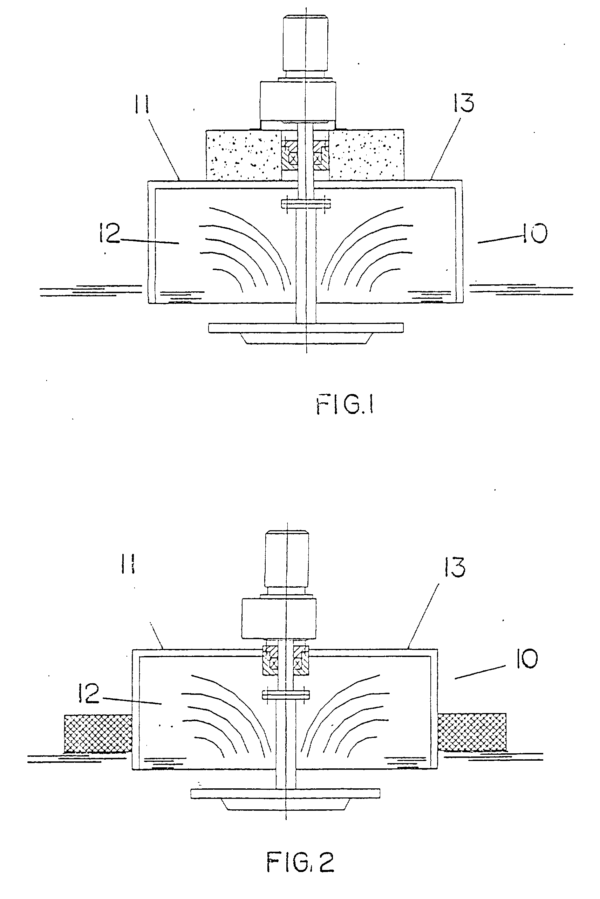

Fig. 1 is a schematic view of a kind of fixed surface aerator, containing the inventive system; and
Fig. 2 is a schematic view of a type of floating surface aerator, also presenting this invention.

According to the enclosed illustrations, a fixed or floating surface aerator for effluent treatment 10 receives the adaptation of a cover device 11 that may have cylindrical or square shape, depending on the necessity or features of the biological reactor, without material restrictions, if it is compatible with the effluent to be treated and with pure oxygen.

This cover 11 is placed above the liquid level and it internally defines a conditioning chamber 12 for the pure oxygen injected through a superior entrance 13 in the cover. Means of total sealing of the cover 11 are provided to avoid loss of the injected air - this sealing can be done by means of a mechanic sealing system, rubber rings or other similar ways. Being formed this way, the chamber 12 encloses the pure oxygen in its interior, creating a rich atmosphere in oxygen that, through the splash action, permits the gas to be slowly absorbed and immediately incorporated and mixed in the liquid means.

To implement this system it is necessary to observe the following factors :
- the gas must be enclosed to avoid its contact with the air before it is dissolved;
- the contact area of the liquid gas must be large enough to permit the oxygen dilution in the effluent, and
- the mix must be sufficient to dilute the gas.

To place the cover 11 it must be taken into consideration the fact that the liquid cannot be in direct contact with the cover walls, because it would cause the growth of droplets, forming a film and damaging the gas utilization. Controlling pressure in the interior of the chamber 11 is important to avoid a variation of the liquid column in its interior and, this control can be done in several ways, such as: through the relief valve, controlling the pressure with a spring, counterweight or any other means that permit relieving the pressure in the interior of the chamber, or through a pressure controller that receives a sign of overpressure above a determined value and sends another sign to a solenoid valve that interrupts the oxygen supplying; or through a manual spheric valve, or similar, that permits relieving the pressure through a timer that stops the oxygen supplying by pre-adjustments.

The system of oxygen pressure control can be fixed in the chamber 11 or in a remote way, being placed in the supplying oxygen panel.

Depending on the installing features, perilous area, discharge control or any other that might be necessary, specific control devices as a manometer, thermometer, process controller can be used.

It must be understood that this system can also be applied in other situations, independent of effluent or water treatment, whenever it is necessary to dissolve any gas in liquid means, provided that there is a mixture system and a saturate chamber with the gas to be dissolved.

## Claims

1. Conversion installation system of effluent treatment, to be preferably adapted to superficial aerators in effluent treatment, **characterized in that** basically a chamber (11) in the format of a cover device is enclosed, placed above the level of the liquid to be treated and defining internally a watertight chamber (12) of pure oxygen conditioning injected through a superior entrance (13) provided in the cover (11).

2. Conversion installation system of effluent treatment according to claim 1, **characterized in that** a direct contact between the liquid and the cover walls (11) is avoided, that the gas is enclosed, avoiding its contact with the air before it is dissolved, that the area of contact of the liquid gas is large enough to permit oxygen dilution in the effluent and that the mix is sufficient to dilute the gas.

3. Conversion installation system of effluent treatment according to claim 1 or 2, **characterized in that** means of total sealing of the chamber (11), such as a mechanic seal, are provided.

4. Conversion installation system of effluent treatment according to claim 1 or 2, **characterized in that** means of total sealing of the chamber (11), such as a sealing system, are provided.

5. Conversion installation system of effluent treatment according to claim 1 or 2, **characterized in that** means of total sealing of the chamber (11), such as rubber rings, are provided.

6. Conversion installation system of effluent treatment according to any of the claims 1 to 5, **characterized in that** a pressure control is placed in the interior of the chamber (12), avoiding the variation of the liquid column in its interior, and that this control is done through a relief valve controlling pressure with a spring.

7. Conversion installation system of effluent treatment according to any of the claims 1 to 5, **characterized in that** a pressure control is placed in the interior of the chamber (12), avoiding the variation of the liquid column in its interior, and that this control is done through a counterweight.

8. Conversion installation system of effluent treatment according to any of the claims 1 to 5, **characterized in that** a pressure control is placed in the interior of the chamber (12), avoiding the variation of the liquid column in its interior, and that this control is done through a pressure controller that receives a sign of overpressure above a determined value and sends another sign to a solenoid valve that interrupts the oxygen supply.

9. Conversion installation system of effluent treatment according to any of the claims 1 to 5, **characterized in that** a pressure control is placed in the interior of the chamber (12), avoiding the variation of the liquid column in its interior, and that this control is done through a manual spheric valve, or similar permitting relieving the pressure through an opening in it.

10. Conversion installation system of effluent treatment according to any of the claims 1 to 5, **characterized in that** a pressure control is placed in the interior of the chamber (12), avoiding the variation of the liquid column in its interior, and that this control is done through a timer that periodically interrupts the oxygen supply by pre-adjustments.
